# EUROPEAN PATENT APPLICATION

(11) **EP 1 710 743 A1**
(43) Date of publication of application: **11.10.2006**
(21) Application number: 06101593.9
(22) Date of filing: 13.02.2006
(51) Int. Cl.: G06Q 30/00

(54) **A method and system for managing web profile information**

(30) Priority: 31.03.2005 EP 05368010
(71) Applicant: International Business Machines Corporation, Armonk, N.Y. 10504 (US)
(72) Inventor: Coulomb, Beatrice, 06800 Cagnes sur mer (FR); Buschi, Giovanni, 06200 Nice (FR); Gibault, Dimitris, 06800 Cagnes sur mer (FR); Palaysi, Christophe, 06270 Villeneuve Loubet (FR)
(74) Representative: Etorre, Yves Nicolas

(57) **Abstract**

A method and system for providing, storing and managing a user profile. A user profile is originally stored in a central storage repository which can then be accessed by many different providers. After appropriate authentication the user profile can then be downloaded to the provider sites. This means a user does not have to enter their details many times when accessing and using different providers .

## Description

### Technical Field of the Invention

The present invention is directed to web profile information, and more particularly to a method and system for managing web profile information.

### Background Art

Whenever a user accesses a web page it is generally necessary to complete certain registration information. This information may include name, address, birth date, e-mail details et cetera. Usually each web site has a slightly different registration form and each time it is necessary to manually fill in the form.

As the user may fill in many registrations it is possible that the user will lose track of some or all of the registration details. In addition, if the user changes any details it is necessary to remember all the registrations and correct the information on each.

### Object of the invention

One object of the present invention is to overcome at least some of the problems associated with the prior art and provide a method and system for managing web profile information.

### Summary of invention

The present invention is directed to the method and system as defined in the independent claims.

More particularly the present invention discloses a method of managing web profile information comprising the steps of:
storing user profile on a central storage repository,
providing web access to the central web storage repository from one or more provider sites,
authenticating a connection between a provider site and the central storage repository in which the provider requests a download of the user profile, and
downloading the user profile to the provider site.

More particularly the present invention discloses a system comprising means adapted for carrying out the steps of the appended method claims.

Further embodiments of the invention are provided in the appended dependent claims.

The advantages of the present invention are set out below. The user needs only add profile information once at a central storage location. This avoids the needs for multiple and repetitive entry of information. In addition, if the user needs to change any profile information it is merely necessary to connect to the central storage location and update that rather than a multitude of individual locations such as merchant sites etc.

### Brief Description of the Drawings

Reference will now be made, by way of example, to the accompanying drawings, in which:
Figure 1 is a diagram showing how a user is created in accordance with the present invention.
Figure 2 is a diagram showing user profile retrieval by a third party.
Figure 3 is a diagram showing a web profile update process.
Figure 4 is a flow chart showing the method of the present invention.

### Detailed description of the preferred embodiment

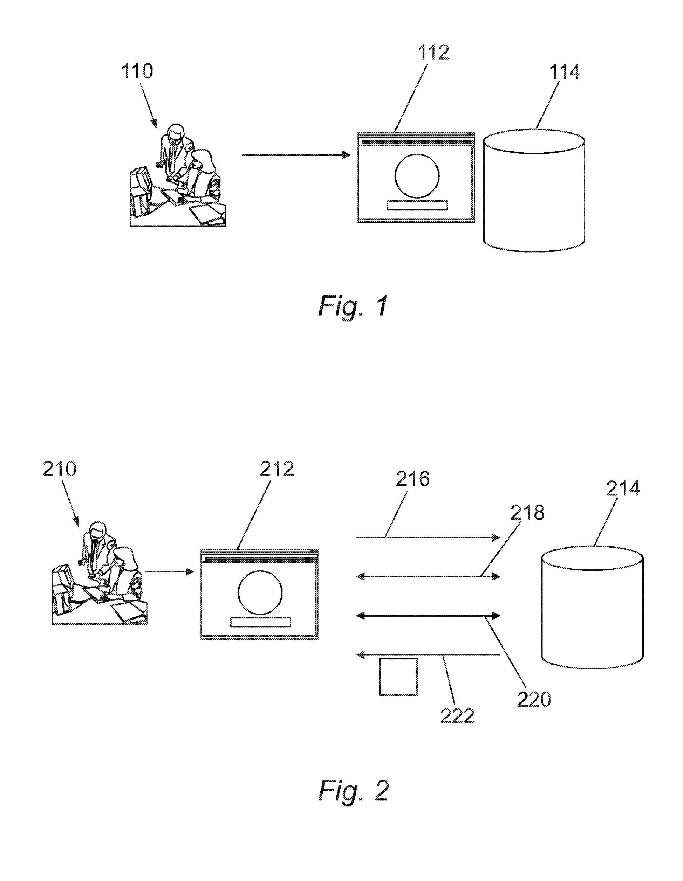

Referring initial to Figure 1, a web user 110 is connected via appropriate means (not shown) to a web page 112. The web page is that of a profile provider 114. The web user connects to the web page in order to either enrol and create a profile, update and maintain a profile or delete a profile.

The first time the user accesses the web page 112 it will be necessary to enrol and create a user profile. This will involve entering personal data as identified below including setting up a login identification and a password.

At subsequent visits to the web page 112 it will be necessary to always enter the login ID and the password 116 before access is given to the user profile. The profile can then be easily amended or deleted as appropriate by the user.

The personal data entered by the user will include the following list, which is by way of example only and may include more or less data as appropriate. Some of the data may be essential and some may be optional.

The data may include the following:
- Name
- Address
- Telephone Number
- Mobile Number
- Fax Number
- E-mail
- Gender
- Age
- Date of birth
- Authentication information (the purpose of this is described in further detail below)
- Security questions and answers
- Bank or credit card details
- Possible delivery addresses
- Demographic information
- Interests / hobbies etc

The user profile may not always relate to a customer, but may relate to an object for example a car. In this case car details may be stored and used to populate an insurance providers profile form and a garage profile form. An individual may have a user profile which includes different sections which can individually or in combination be used to populate a provider profile form.

Once the user has set up the user profile it may only be accessed by the user using the login and password; an administrator if the user losses the login and/or password; and a merchant web site (details to be described below). If the administrator needs to access the profile the user will be asked a number of questions including certain security questions, as is well known in the art.

Referring now to Figure 2 the web user 210(the same as 110) accesses a merchant web site 212 with the intention of purchasing something. The merchant web site has an ability to link to the profile provider 214 (as 114), but can only receive information from the provider if certain conditions are met.
The user makes a profile retrieval request 216 through a selection on the merchant web site. The merchant web site may have an optional merchant authentification process 218 which links the merchant web site to certain information at the profile provider site. There will also be a user authentification process 220 which require an entry of one or more of a login ID; a password; authentification information; a security question and answers etc.

Once the authentification process or processes have been successfully completed, the user profile 224 is transferred 222 to the merchant web site. The profile can then be used to populate the merchant web site profile requirements. The profile information is thus provided to the merchant web site without any data entry from the user. A record is maintained at the profile provider of all merchant web sites which have a certain user profile.

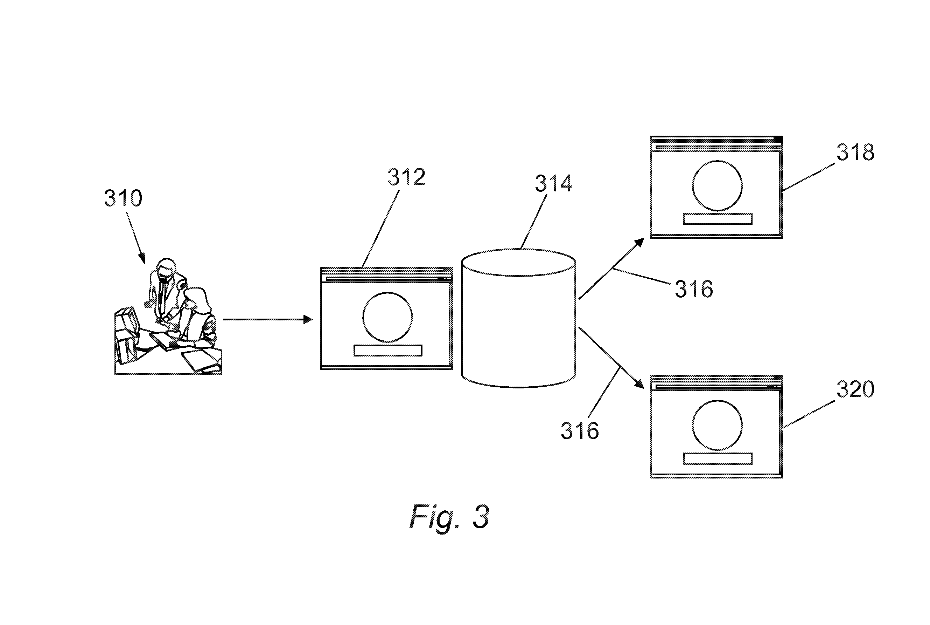

Referring now to Figure 3 an update mechanism is now described. If the user 310 (as 110 and 210) wishes to update some or all of their profile i.e. a new address, bank detail etc, the user need only connect to the web page 312 (as 112) of the profile provider 314 (as 114 and 214). At the web page 312, after appropriate user authentification, the user may update the profile information. This information is then sent 316 to each merchant web site 318 and 320 in Figure 3. The updates will be sent to as many live merchant web sites as are known to have previously received the given user profile. If the user has accessed the profile provider to delete the user profile the update to the merchant web sites may include either a request to delete the profile or an update of the profile with empty fields.

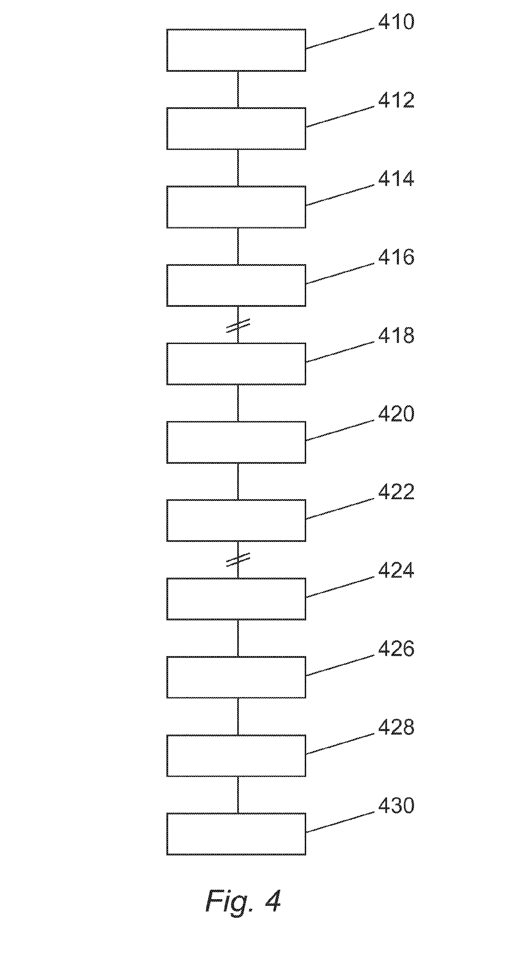

Referring now to Figure 4 the steps that occur in the present invention are now described. A web user logs onto a web page belonging to a profile provider, step 410.

The web user then enters profile information including login and password details on the web page, step 412. This creates a user profile which is stored on the profile provider server step 414.

At a later time the user enters a web page of a merchant website in order to purchase a product, step 416. The user requests the merchant website to connect to the profile provider to retrieve user profile information, step 418. An authentification process occurs between the merchant and the profile provider (optional) and between the user and the profile provider via the merchant site, step 420. Once authentication has been confirmed the user profile is downloaded from profile provider to the merchant site, without the user needing to enter the information in the user profile of the merchant site, step 422.

At a still later time (maybe many months or more) the user may re-enter the profile provider web page to make changes to the user profile, step 424. Authentication process occurs, step 426 and then the user profile is updated, step 428. The updated user profile is then sent to any merchant site which has previously had the user profile, step 430. Obviously an appropriate authentification process is included in step 430.
The present invention has been described in the context of web pages but may equally apply to any place where a user may be required to enter profile information e.g. a phone or other pda device connected to a provider of some sort. The provider may not be a merchant, but may instead be another type of provider e.g. services, information storage, etc.
While the invention has been particularly shown and described with reference to a preferred embodiment, it will be understood that various changes in form and detail may be made therein without departing from the spirit and the scope of the invention.

## Claims

1. A method of managing web profile information comprising the steps of:
storing a user profile on a central storage repository,
providing web access to the central web storage repository from one or more provider sites,
authenticating a connection between a provider site and the central storage repository in which the provider requests a download of the user profile,
downloading the user profile to the provider site.

2. The method of claim, wherein the step of authenticating the connection comprises entering user authentification data via the provider site to thereby authenticate the provider with respect to the user.

3. The method of claim 1 or claim 2, further comprising providing the profile information in a form of a plurality of pieces of personal information.

4. The method of any preceding claim, wherein the downloading step comprises downloading the user profile to the provider site to populate a provider site user profile.

5. The method of any preceding claim, further comprising updating the user profile via access to the central storage repository and sending the updated user profile to the provider site.

6. The method of any preceding claim, further comprising authenticating a connection between a plurality of provider sites and the central storage repository to allow download of the user profile to all authenticated provider sites.

7. The method of any preceding claim, wherein the authenticating step comprises:
at a first access to the central storage repository entering a user identification and a password; storing the user identification and the password at the central storage repository; and
at a later access to the central storage repository entering an entered user identification and an entered password via either the provider site or directly comparing the entered user identification and password with those stored at the central repository.

8. A system comprising means adapted for carrying out the steps of the method according to any one of the preceding claims.

9. A computer program comprising instructions for carrying out the steps of the method according to any one of steps 1 to 7, wherein said computer program is executed on a computer system.
